# EUROPÄISCHE PATENTSCHRIFT

(11) **EP 3 722 118 B1**
(45) Veröffentlichungstag und Bekanntmachung des Hinweises auf die Patenterteilung: **02.02.2022**
(21) Anmeldenummer: 20168448.7
(22) Anmeldetag: 07.04.2020
(51) Int. Cl.: B60G 5/04, B60K 1/02, B60K 1/04

(54) **FAHRZEUGBAUGRUPPE FÜR EIN INSBESONDERE GELÄNDEGÄNGIGES NUTZFAHRZEUG**
VEHICLE ASSEMBLY FOR AN OFF-ROAD UTILITY VEHICLE IN PARTICULAR
MODULE POUR UN VÉHICULE UTILITAIRE, EN PARTICULIER TOUT-TERRAIN

(30) Priorität: 12.04.2019 DE 102019109770
(43) Veröffentlichungstag der Anmeldung: 14.10.2020
(73) Patentinhaber: General Dynamics European Land Systems - Mowag GmbH, 8280 Kreuzlingen (CH)
(72) Erfinder: Kulcsar, Jürgen, 78465 Konstanz (DE); Schroeter, Jens, 89274 Tägerwilen (CH)
(74) Vertreter: BSB Patentanwälte Schütte & Engelen Partnerschaft mbB

(56) Entgegenhaltungen:
- CH-A5- 663 767
- CN-A- 105 438 262
- DE-A1- 2 359 054
- DE-A1-102012 109 728
- US-A1- 2012 073 889

## Beschreibung

Die vorliegende Erfindung betrifft eine Fahrzeugbaugruppe für ein insbesondere geländegängiges Nutzfahrzeug mit wenigstens einem Fahrgestell und wenigstens einem an dem Fahrgestell aufnehmbaren Triebstrang. Der Triebstrang umfasst wenigstens zwei Starrachseinheiten mit jeweils wenigstens einem Schubrohrrahmen.

Derartige Fahrzeuge eignen sich besonders gut für das Fahren in schwierigstem Gelände. Um die Geländeeigenschaften und die Fahrsicherheit weiter zu verbessern, ist mit der CH 663 767 A5 ein Stabilisator zur Minderung der bei solchen Fahrzeugen auftretenden Wankbewegungen bekannt geworden. Dabei sind die starren Achsen mit jeweils einer Deichselvorrichtung zu einem trapezförmigen Schubrohrrahmen ausgebildet. Die Schubrohrrahmen sind an dem Fahrzeugrahmen bzw. Fahrgestell über entsprechende Lenker in einem Längs- und Querverbund angelenkt.

Demgegenüber ist es die Aufgabe der vorliegenden Erfindung, die Nutzungsmöglichkeiten eines solchen Fahrzeugs zu verbessern und vorzugsweise flexibler zu gestalten und dabei zugleich die besondere Geländegängigkeit auszunutzen bzw. nicht einzuschränken.

Diese Aufgabe wird durch eine Fahrzeugbaugruppe mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Fahrzeugbaugruppe ist für ein insbesondere geländegängiges Nutzfahrzeug vorgesehen und umfasst wenigstens ein Fahrgestell und wenigstens einen an dem Fahrgestell aufnehmbaren Triebstrang. Der Triebstrang umfasst wenigstens zwei Starrachseinheiten mit jeweils wenigstens einem Schubrohrrahmen. Insbesondere ist wenigstens eine der wenigstens zwei Starrachseinheiten antreibbar bzw. angetrieben ausgebildet. Besonders bevorzugt umfasst der Triebstrang wenigstens zwei antreibbare Starrachseinheiten. Es ist möglich und bevorzugt, dass alle vorgesehenen Starrachseinheiten antreibbar ausgebildet sind. Die Schubrohrrahmen der wenigstens zwei Starrachseinheiten sind mittels wenigstens einer am Fahrgestell befestigten Wankstabilisatoreinrichtung gelenkartig miteinander verbunden und vorzugsweise über die gemeinsame Wankstabilisatoreinrichtung an das Fahrgestell schwenkbar angebunden. Dabei umfasst die Fahrzeugbaugruppe wenigstens eine Aufnahmeeinrichtung. Die Aufnahmeeinrichtung ist dazu geeignet und ausgebildet, wenigstens eine Batterie wenigstens einer Batterieeinrichtung zur Energieversorgung wenigstens einer elektrischen Maschineneinrichtung in Vorwärtsfahrtrichtung vor und/oder hinter der Wankstabilisatoreinrichtung an das Fahrgestell anzubinden. Die Batterieeinrichtung dient vorzugsweise zur Energieversorgung wenigstens eines elektrischen Fahrantriebs und/oder Anbaugeräts. Insbesondere stellt die elektrische Maschineneinrichtung wenigstens einen elektrischen Fahrantrieb und/oder wenigstens ein elektrisches Anbaugerät bereit oder ist als solcher bzw. solches ausgebildet. Insbesondere ist die Aufnahmeeinrichtung dazu geeignet und ausgebildet, die wenigstens eine Batterie wenigstens teilweise und insbesondere vollständig oberhalb der Schubrohrrahmen bzw. wenigstens eines der Schubrohrrahmen an das Fahrgestell anzubinden.

Die erfindungsgemäße Fahrzeugbaugruppe bietet viele Vorteile. Einen erheblichen Vorteil bietet die Aufnahmeeinrichtung, mit der die Batterie optimal in die Komponenten für die besondere Geländegängigkeit integriert werden kann. Die Erfindung bietet daher eine besonders gute Möglichkeit, die Fahrzeugnutzung durch den Einbau von alternativen Antrieben zu erweitern. Dabei bietet die Aufnahmeeinrichtung eine Befestigung der Batterie, welche sich besonders vorteilhaft auf das Fahrverhalten und die Wankstabilität auswirkt.

Der Schubrohrrahmen stellt insbesondere einen Achskörper der Starrachseinheit dar und ist vorzugsweise als Deichsel bzw. deichselartig ausgeführt. Der Schubrohrrahmen ist insbesondere in der Art einer Deichsel bewegbar an das Fahrgestell angebunden. Insbesondere sind die Schubrohrrahmen über jeweils wenigstens eine Gelenkeinrichtung, hier als Zentralgelenk bezeichnet, bewegbar an dem Fahrgestell befestigt. Dabei können die Zentralgelenke als Kugelgelenke und/oder Kugelflächengelenke und/oder Gummipuffer oder dergleichen ausgeführt sein. Dabei sind die Zentralgelenke vorzugsweise an einem Querrohr des Schubrohrrahmens angebunden. Die Gelenkeinrichtung dient insbesondere zur Längsführung des Schubrohrrahmens bzw. der Deichsel.

Durch das Zentralgelenk werden vorzugsweise im Wesentlichen Längskräfte aufgenommen insbesondere unter Gewährleistung der Achsbewegungen Einfedern (Rotation um y-Achse des Fahrzeugkoordinatensystems) und Verschränken (Rotation um x-Achse). Zur Querführung der Schubrohrrahmen bzw. der Deichseln umfassen die Starrachseinheiten vorzugsweise jeweils wenigstens eine Querführungseinrichtung. Die Querführungseinrichtung umfasst insbesondere wenigstens eine Gestängeeinrichtung, welche über Gelenke ebenfalls mit dem Fahrgestell bzw. Aufbau verbunden ist. Die Querführungseinrichtung kann wenigstens einen Panhardstab und/oder Wattgestänge und/oder wenigstens eine Scherenführung umfassen oder derart ausgebildet sein.

Vorzugsweise sind die zuvor beschriebenen Starrachseinheiten sowohl für die Vorderachseinheit als auch für die Hinterachseinheit vorgesehen. Miteinander verbunden sind die Starrachseinheiten vorzugsweise über wenigstens einen schwenkbaren Waagbalken der Wankstabilisatoreinrichtung. Der Waagbalken ist insbesondere drehbar an dem Fahrgestell angebunden. Die Starrachseinheiten sind insbesondere über jeweils wenigstens ein Gelenk bzw. gelenkartig mit dem Waagbalken verbunden.

In allen Ausgestaltungen ist es bevorzugt, dass die Starrachseinheiten als De-Dion-Achsen ausgebildet sind oder wenigstens eine solche umfassen. Möglich ist auch, dass wenigstens eine der Starrachseinheiten als De-Dion-Achse ausgebildet ist oder wenigstens eine solche umfasst. Dadurch können ungefederte bzw. ungedämpfte Massen besonders vorteilhaft verringert werden. Bevorzugt ist eine zum Antreiben der jeweiligen Starrachseinheit dienende und insbesondere mit einer Getriebeeinrichtung wirkverbundene Antriebsverbindung außerhalb des Schubrohrrahmens bzw. eines Achsrohrs angeordnet. Die Starrachseinheiten umfassen insbesondere jeweils wenigstens eine Starrachse. Es ist aber auch möglich, dass die Starrachseinheiten als Halbstarrachsen ausgebildet sind oder wenigstens eine solche umfassen, beispielsweise eine Verbundlenkerachse oder dergleichen.

Vorzugsweise weisen die Starrachseinheiten jeweils wenigstens ein Ausgleichsgetriebe auf. Dabei sind die Ausgleichsgetriebe vorzugsweise außerhalb der Schubrohrrahmen angeordnet. Es können auch andere Antriebsverbindungen außerhalb des Schubrohrrahmens angeordnet sein. Das Ausgleichsgetriebe kann auch als Achs-Differenzial bezeichnet werden.

In allen Ausgestaltungen ist es bevorzugt, dass die elektrische Maschine außerhalb des Schubrohrrahmens angeordnet ist. Insbesondere ist die elektrische Maschine über außerhalb des Schubrohrrahmens verlaufende Antriebsverbindungen, z. B. Antriebswellen, mit wenigstens einem Rad bzw. mit den Rädern wirkverbunden.

Vorzugsweise ist die wenigstens eine Batterie zwischen zwei Längsträgern des Fahrgestells aufnehmbar. Insbesondere umfasst das Fahrgestell wenigstens zwei und vorzugsweise wenigstens einen rechten und wenigstens einen linken Längsträger, zwischen denen die wenigstens eine Batterie aufnehmbar ist. Insbesondere ist die Batterie in einem Leiterrahmen des Fahrgestells aufnehmbar. Vorzugsweise ist die wenigstens eine Batterie benachbart zu der Wankstabilisatoreinrichtung aufnehmbar.

Die Aufnahmeeinrichtung ist vorzugsweise dazu geeignet und ausgebildet, die wenigstens eine Batterie an einem Querträger der Wankstabilisatoreinrichtung anzubinden. Der Querträger erstreckt sich insbesondere zwischen zwei Längsträgern des Fahrgestells. Solche Befestigungen und Positionen der Batterie sind besonders vorteilhaft für das Fahrverhalten und die Wankstabilität. Die Aufnahmeeinrichtung kann dazu geeignet und ausgebildet sein, die wenigstens eine Batterie an wenigstens einer Querstrebe eines Leiterrahmens des Fahrgestells und/oder an einer anderen Tragstruktur des Fahrgestells und/oder an einer Tragstruktur des Triebstrangs anzubinden.

In einer vorteilhaften Ausgestaltung ist die Aufnahmeeinrichtung dazu geeignet und ausgebildet, wenigstens eine Leistungselektronik und/oder wenigstens eine Steuereinrichtung und/oder wenigstens eine Ladeeinrichtung für die Batterieeinrichtung aufzunehmen.

In einer bevorzugten Weiterbildung umfasst die elektrische Maschineneinrichtung wenigstens eine einen Fahrmotor bereitstellende elektrische Maschine. Der Fahrmotor ist insbesondere Teil des elektrischen Fahrantriebs. Insbesondere ist die elektrische Maschine als Fahrmotor ausgebildet oder umfasst wenigstens einen solchen. Dabei stellt die elektrische Maschine vorzugsweise wenigstens einen Teil des für eine Fahrzeugfortbewegung vorgesehenen Drehmoments bereit. So kann das Fahrzeug unaufwendig und unter Beibehaltung der besonderen Fahreigenschaften mit einem teilelektrischen oder auch mit einem vollelektrischen Antrieb ausgestattet werden. Insbesondere ist die den Fahrmotor bereitstellende elektrische Maschine einem teilelektrischen Antrieb bzw. Hybridantrieb oder einem vollelektrischen Antrieb zugeordnet. Der Fahrmotor wird insbesondere von der Batterieeinrichtung mit elektrischer Energie versorgt.

Die elektrische Maschineneinrichtung kann auch wenigstens eine einen Generator bereitstellende elektrische Maschine umfassen. Der Generator kann mittels einer Brennkraftmaschine antreibbar sein und/oder im Schubbetrieb angetrieben werden. Insbesondere ist der Generator dazu geeignet und ausgebildet, die Batterieeinrichtung aufzuladen. Der Generator kann auch die elektrische Energie für den Fahrantrieb und/oder für wenigstens ein Nebenaggregat erzeugen.

Es ist möglich, dass für jede antreibbare Starrachseinheit wenigstens eine elektrische Maschine vorgesehen ist. Die elektrische Maschine stellt insbesondere einen Fahrmotor bereit. Vorzugsweise ist die elektrische Maschine an ein Ausgleichsgetriebe angebunden. Insbesondere ist die elektrische Maschine an dem Ausgleichsgetriebe angebunden, welches durch sie antreibbar ist. Insbesondere ist die elektrische Maschine dabei als ein Achsmotor ausgebildet oder umfasst wenigstens einen solchen. Es ist möglich, dass im Allradbetrieb eine elektrische Maschine ein Drehmoment auf eine erste Achseinheit, insbesondere die Vorderachseinheit, überträgt und dass eine weitere elektrische Maschine ein Drehmoment auf eine zweite Achseinheit, insbesondere die Hinterachseinheit, überträgt.

Es ist möglich und vorteilhaft, dass der Triebstrang wenigstens eine vor der Wankstabilisatoreinrichtung angeordnete zweite elektrische Maschine zum Antrieb einer Vorderachseinheit und wenigstens eine hinter der Wankstabilisatoreinrichtung angeordnete dritte elektrische Maschine zum Antrieb einer Hinterachseinheit umfasst. Dabei stellen die elektrischen Maschinen jeweils wenigstens ein Ausgleichsgetriebe der Vorderachseinheit bzw. der Hinterachseinheit bereit. Insbesondere ersetzen die elektrischen Maschinen das für die jeweilige Achseinheit sonst notwendige Ausgleichsgetriebe. Durch die Verlagerung bzw. den Verzicht von Antriebselementen werden Bauräume geschaffen, die vorteilhaft als Bauräume bzw. Bewegungsräume für die Wankstabilisatoreinrichtung genutzt werden können.

Möglich ist auch, dass für jedes antreibbare Rad des Triebstrangs wenigstens eine elektrische Maschine vorgesehen ist. Dabei ist die elektrische Maschine drehmomentübertragend an ein Rad und beispielsweise an eine Radnabe und/oder Radvorgelege angebunden. Insbesondere stellt die elektrische Maschine dabei einen Elektromotor bereit und ist beispielsweise als ein Radmotor bzw. Nabenmotor ausgebildet. Insbesondere umfasst der Triebstrang wenigstens zwei antreibbare Räder für jede antreibbare Starrachseinheit. Ein solcher Allradantrieb bietet viele Vorteile und ermöglicht beispielsweise eine gezielte Anpassung des Drehmoments, welches auf das jeweilige Rad einwirken soll.

In allen Ausgestaltungen ist es bevorzugt, dass die elektrische Maschine außerhalb des Schubrohrrahmens angeordnet ist. Vorzugsweise ist wenigstens ein Ausgleichsgetriebe außerhalb des Schubrohrrahmens angeordnet. Insbesondere sind der Achsmotor und/oder der Radmotor außerhalb des Schubrohrrahmens angeordnet. Insbesondere sind alle drehmomentübertragenden Komponenten außerhalb des Schubrohrrahmens angeordnet. Insbesondere sind die Starrachseinheiten als De-Dion-Achsen ausgebildet.

In einer vorteilhaften Weiterbildung umfasst die elektrische Maschineneinrichtung wenigstens eine einen Generator bereitstellende elektrische Maschine. Dabei ist die elektrische Maschine bzw. der Generator dazu geeignet und ausgebildet, von wenigstens einer Brennkraftmaschine angetrieben zu werden und die Batterieeinrichtung dadurch aufzuladen. Möglich ist auch, dass die elektrische Maschine bzw. der Generator dazu geeignet und ausgebildet ist, durch einen Schubbetrieb angetrieben zu werden und dadurch die Batterie aufzuladen. Dadurch kann zusammen mit der erfindungsgemäß angeordneten Batterie ein besonders vorteilhafter Hybridantrieb verwirklicht werden, welcher die besonderen Fahreigenschaften unterstützt bzw. weiter verbessert.

Vorzugsweise ist die elektrische Maschine in Vorwärtsfahrtrichtung vor und/oder hinter der Wankstabilisatoreinrichtung und insbesondere vor und/oder hinter einem Waagbalken der Wankstabilisatoreinrichtung an das Fahrgestell angebunden. Das bietet eine besonders vorteilhafte Einbindung der elektrischen Maschine hinsichtlich der Wankstabilisierung.

In einer besonders vorteilhaften Ausgestaltung ist die Aufnahmeeinrichtung dazu geeignet und ausgebildet, wenigstens eine Batterie in Vorwärtsfahrtrichtung vor der Wankstabilisatoreinrichtung und insbesondere wenigstens teilweise und vorzugsweise vollständig oberhalb des Schubrohrrahmens an das Fahrgestell anzubinden. Vorteilhaft und bevorzugt ist auch, dass die Aufnahmeeinrichtung dazu geeignet und ausgebildet ist, wenigstens eine Batterie in Vorwärtsfahrtrichtung hinter der Wankstabilisatoreinrichtung und insbesondere wenigstens teilweise und vorzugsweise vollständig oberhalb des Schubrohrrahmens an das Fahrgestell anzubinden. Insbesondere umfasst die Batterieeinrichtung wenigstens zwei Batterien. Dabei ist eine erste Batterie in Vorwärtsfahrtrichtung vor der Wankstabilisatoreinrichtung und wenigstens eine zweite Batterie in Vorwärtsfahrtrichtung hinter der Wankstabilisatoreinrichtung an das Fahrgestell anbindbar.

Vorzugsweise ist die Aufnahmeeinrichtung dazu geeignet und ausgebildet, wenigstens eine Batterie, insbesondere eine erste Batterie, an einem rechten Längsträger des Fahrgestells zu befestigen. Vorzugsweise ist die Aufnahmeeinrichtung dazu geeignet und ausgebildet, wenigstens eine Batterie, insbesondere eine zweite Batterie, an einem linken Längsträger des Fahrgestells zu befestigen. Insbesondere liegen sich die Batterien direkt gegenüber. Insbesondere sind die Batterien dabei beide vor oder hinter der Wankstabilisatoreinrichtung. Die Aufnahmeeinrichtung kann dazu geeignet und ausgebildet sein, wenigstens eine Batterie vor der Wankstabilisatoreinrichtung an einem Längsträger des Fahrgestells und wenigstens eine Batterie hinter der Wankstabilisatoreinrichtung an einem Längsträger des Fahrgestells zu befestigen. Solche Befestigungen der Batterien sind besonders vorteilhaft für das Fahrverhalten und die Wankstabilität.

In einer besonders vorteilhaften Ausgestaltung ist die Aufnahmeeinrichtung dazu geeignet und ausgebildet, wahlweise die wenigstens eine Batterie oder wenigstens eine Brennkraftmaschine an das Fahrgestell anzubinden. Vorzugsweise ist die Aufnahmeeinrichtung dazu geeignet und ausgebildet, wahlweise die wenigstens eine Batterie oder wenigstens eine drehmomentübertragend mit einer Brennkraftmaschine gekoppelte Getriebeeinrichtung und vorzugsweise ein Hauptgetriebe und/oder Verteilergetriebe an das Fahrgestell anzubinden. Eine solche Aufnahmeeinrichtung bietet ein besonders unaufwendiges Konzept, um ein Fahrzeug mit alternativen Antrieben zu wechseln. Ein solcher Wechsel kann beispielsweise im Rahmen der Herstellung oder auch im Rahmen einer Wartung des Fahrzeugs vorgesehen sein. Wenn die Batterie an die Aufnahmeeinrichtung gekoppelt ist und kein Hauptgetriebe vorgesehen ist, ist die erste elektrische Maschine insbesondere direkt an die Brennkraftmaschine gekoppelt. Dann sind die zweite und dritte elektrische Maschine vorzugsweise an jeweils ein Ausgleichsgetriebe gekoppelt.

Die erfindungsgemäße Aufgabe wird auch durch eine Fahrzeugbaugruppe nach dem Oberbegriff von Anspruch 1 gelöst, bei welcher der Schubrohrrahmen wenigstens eine zwischen den Rädern verlaufende Querachse umfasst. Dabei umfasst die Fahrzeugbaugruppe wenigstens eine elektrische Maschineneinrichtung mit wenigstens einer einen Fahrmotor bereitstellenden elektrischen Maschine. Die elektrische Maschine ist außerhalb und vorzugsweise oberhalb der Querachse angeordnet. Die elektrische Maschine ist dabei vorzugsweise wie zuvor beschrieben ausgebildet. Die Fahrzeugbaugruppe kann dabei auch wie die zuvor beschriebene Fahrzeugbaugruppe ausgebildet sein. Eine solche Anordnung des Fahrmotors bietet eine besonders unaufwendige Integration in den Triebstrang und zugleich eine hinsichtlich der Geländegängigkeit und der Wankstabilität besonders günstige Positionierung. Dabei ist der Fahrmotor insbesondere als Achsmotor oder als Radmotor ausgebildet. Insbesondere sind die Starrachseinheiten als De-Dion-Achsen ausgebildet. Dabei sind die Räder der Starrachseinheit über eine Querachse des Schubrohrrahmens am Fahrgestell befestigt, während der Fahrmotor keine tragende Funktion erfüllt und separat zu der Querachse angeordnet ist.

In allen Ausgestaltungen ist es bevorzugt, dass die Fahrzeugbaugruppe wenigstens eine Halteeinrichtung umfasst. Dabei ist die Halteeinrichtung dazu geeignet und ausgebildet, wahlweise die wenigstens eine elektrische Maschine oder eine drehmomentübertragend mit einer Brennkraftmaschine gekoppelte Getriebeeinrichtung wenigstens teilweise an den Schubrohrrahmen und/oder das Fahrgestell anzubinden. Möglich ist auch, dass die Halteeinrichtung dazu geeignet und ausgebildet ist, wahlweise die wenigstens eine elektrische Maschine oder die Getriebeeinrichtung wenigstens teilweise an den Schubrohrrahmen anzubinden. Eine solche Halteeinrichtung bietet eine besonders unaufwendige Integration von elektrischen Antriebskomponenten im Tausch zu konventionellen Antriebskomponenten.

Beispielsweise ist die Halteeinrichtung dazu geeignet und ausgebildet, das Ausgleichsgetriebe wahlweise mit einem achsweisen Fahrmotor oder mit einem Hauptgetriebe und/oder Verteilergetriebe zu koppeln. Die Halteeinrichtung kann z. B. auch dazu geeignet und ausgebildet sein, wahlweise einen Radmotor oder ein Ausgleichsgetriebe mit einem Rad bzw. einer Radnabe zu koppeln.

Die Halteeinrichtung und auch die Aufnahmeeinrichtung ermöglichen ein vielseitiges und modulares Antriebskonzept, bei dem Komponenten des konventionellen Antriebs zügig und auch nach der Herstellung des Fahrzeugs gegen Komponenten eines elektrischen Antriebs ausgetauscht werden können und umgekehrt.

Unter dem Begriff Anbinden bzw. unter einer Anbindung wird erfindungsgemäß insbesondere eine Befestigung und vorzugsweise eine lösbare Befestigung verstanden.

Die Fahrzeugbaugruppe umfasst insbesondere wenigstens eine Batterieeinrichtung mit wenigstens einer Batterie. Die Batterie ist insbesondere als eine Hochvoltbatterie bzw. Traktionsbatterie ausgebildet und umfasst wenigstens ein Batteriemodul mit einer Vielzahl von Batteriezellen. Die Batterieeinrichtung kann eine Leistungselektronik und/oder eine Ladevorrichtung und/oder andere Steuer- und Kontrolleinrichtungen umfassen.

Die Aufnahmeeinrichtung stellt insbesondere wenigstens einen Aufnahmeraum für die wenigstens eine Batterie bereit. Insbesondere ist die wenigstens eine Batterie und vorzugsweise jede Batterie in wenigstens einem Gehäuse eingehaust. Insbesondere sind die Aufnahmeeinrichtung und das Gehäuse dazu geeignet und ausgebildet, aneinander befestigt und insbesondere lösbar befestigt zu werden. Es kann die gesamte Batterieeinrichtung mittels der Aufnahmeeinrichtung an dem Fahrgestell befestigbar sein.

Die elektrische Maschineneinrichtung umfasst insbesondere wenigstens eine elektrische Maschine. Die elektrische Maschine stellt vorzugsweise wenigstens einen Generator und/oder wenigstens einen Elektromotor bereit oder ist als ein solcher ausgebildet. Es ist möglich, dass die elektrische Maschine dazu geeignet und ausgebildet ist, sowohl einen Generator als auch einen Elektromotor bereitzustellen. Insbesondere umfasst die elektrische Maschineneinrichtung wenigstens zwei elektrische Maschinen. Die elektrische Maschineneinrichtung kann auch drei oder vier oder mehr elektrische Maschinen umfassen. Dabei können die elektrischen Maschinen den Generator und/oder den Elektromotor bzw. Fahrantrieb bereitstellen. Wenn die elektrische Maschine als Elektromotor eingesetzt wird, kann vorgesehen sein, dass die elektrische Maschine alternativ und/oder zusätzlich bzw. gleichzeitig zu der Brennkraftmaschine wenigstens einen Teil des für eine Fahrzeugfortbewegung vorgesehenen Drehmoments bereitstellt. Es ist möglich, dass die Vorderachseinheit und/oder die Hinterachseinheit mittels der ersten elektrischen Maschine antreibbar ist. Insbesondere ist durch die elektrische Maschine dann das Hauptgetriebe und/oder wenigstens eine der nachgeschalteten Komponenten und/oder das Verteilergetriebe und/oder wenigstens eines der Ausgleichsgetriebe antreibbar. Es ist möglich, dass die elektrische Maschine an einem Ausgleichsgetriebe wenigstens einer Starrachseinheit und beispielsweise der Vorderachseinheit und/oder der Hinterachseinheit angebunden ist. Die Ausgleichsgetriebe sind außerhalb der Schubrohrrahmen angeordnet.

Der Triebstrang umfasst insbesondere wenigstens eine Getriebeeinrichtung mit wenigstens einem Hauptgetriebe und/oder mit wenigstens einem Verteilergetriebe. Insbesondere stellt die Getriebeeinrichtung für jede antreibbare Starrachseinheit jeweils wenigstens ein Ausgleichsgetriebe bzw. Differenzialgetriebe bereit, welches insbesondere wenigstens teilweise oder vollständig sperrbar ist. Das Verteilergetriebe kann auch wenigstens ein Ausgleichsgetriebe umfassen, welches insbesondere wenigstens teilweise oder vollständig sperrbar ist. Das Hauptgetriebe kann als ein manuelles oder ein teilautomatisches oder ein vollautomatisches Getriebe ausgebildet sein. Das Hauptgetriebe umfasst insbesondere ein Schaltgetriebe oder ist als ein solches ausgebildet. Der Triebstrang kann wenigstens ein Rad umfassen. Das Hauptgetriebe und/oder das Verteilergetriebe und/oder das Ausgleichsgetriebe sind insbesondere rahmenfest angeordnet.

Vorzugsweise ist die elektrische Maschine zur elektrischen Energieerzeugung unabhängig von einem Fahrbetrieb mittels der Brennkraftmaschine antreibbar. Bevorzugt ist auch, dass die elektrische Maschine zur elektrischen Energieerzeugung nur bei einem Fahrbetrieb mittels der Brennkraftmaschine antreibbar ist. Dabei stellt die elektrische Maschine insbesondere einen Generator bereit oder ist als ein solcher ausgebildet. Die elektrische Maschine kann einer Getriebeeinrichtung und insbesondere einem Hauptgetriebe mit Leerlaufstellung vorgeschaltet sein. Dann kann die elektrische Maschine von der Brennkraftmaschine angetrieben werden, während die Getriebeeinrichtung sich im Leerlauf befindet. So kann bei einem stehenden Fahrzeug mit der elektrischen Maschine Strom erzeugt werden. Möglich ist auch, dass die elektrische Maschine einer Getriebeeinrichtung und insbesondere einem Hauptgetriebe nachgeschaltet ist. Dann wird die elektrische Maschine insbesondere nur dann mittels der Brennkraftmaschine angetrieben, wenn sich das Fahrzeug in Bewegung befindet. Möglich ist auch, dass die elektrische Maschine durch einen Fahrbetrieb bzw. Schubbetrieb antreibbar ist. Insbesondere ist die elektrische Maschine zu Energierückgewinnung bzw. Rekuperation geeignet und ausgebildet. Das Hauptgetriebe und die elektrische Maschine können zeitgleich oder auch zeitversetzt von der Brennkraftmaschine antreibbar sein.

Der hier vorgestellte Triebstrang kann mit einem vollelektrischen Antrieb und/oder mit einem parallelen Hybridantrieb und/oder mit einem seriellen Hybridantrieb und/oder mit einem Mischhybrid-Antrieb ausgestattet sein. Der Mischhybrid-Antrieb ermöglicht insbesondere einen Wechsel zwischen parallelen und seriellen Hybridantrieb. Es ist möglich, dass der Triebstrang als ein leistungsverzweigter Hybridantrieb ausgebildet ist. Beispielsweise treibt die Brennkraftmaschine das Hauptgetriebe und zugleich auch die erste elektrische Maschine an, welche einen Generator bereitstellt. Die von der ersten elektrischen Maschine bereitgestellte Energie wird dann beispielsweise in der Batterieeinrichtung gespeichert und kann zum Beispiel für die zweite und/oder dritte elektrische Maschine verwendet werden.

Die elektrische Maschine weist insbesondere eine Leistung von wenigstens 5 kW und vorzugsweise von wenigstens 10 kW und besonders bevorzugt von wenigstens 20 kW oder mehr auf. Die Leistung der elektrischen Maschine beträgt insbesondere wenigstens ein Zehntel und vorzugsweise wenigstens ein Achtel und besonders bevorzugt wenigstens ein Viertel der Leistung der Brennkraftmaschine. Die elektrische Maschine ist insbesondere über wenigstens eine Welle mit der Brennkraftmaschine und/oder an wenigstens eine Welle der Brennkraftmaschine gekoppelt. Die elektrische Maschine ist insbesondere der Brennkraftmaschine nachgeschaltet. Insbesondere ist die elektrische Maschine zusätzlich zu einer zur Versorgung einer Starterbatterie vorgesehen Lichtmaschine und/oder zu einem Anlasser der Brennkraftmaschine vorgesehen. Im Rahmen der vorliegenden Erfindung wird unter der elektrischen Maschine insbesondere keine Lichtmaschine einer Brennkraftmaschine verstanden.

Die elektrische Maschine ist insbesondere in Vorwärtsfahrtrichtung hinter der Brennkraftmaschine angeordnet. Die elektrische Maschine ist insbesondere an dem Fahrgestell befestigt. Die Brennkraftmaschine ist insbesondere in Vorwärtsfahrtrichtung vor der Wankstabilisatoreinrichtung angeordnet. Die Brennkraftmaschine ist insbesondere zwischen der Vorderachseinheit und der Wankstabilisatoreinrichtung angeordnet. Das Hauptgetriebe und/oder das Verteilergetriebe sind insbesondere in Vorwärtsfahrtrichtung hinter der Wankstabilisatoreinrichtung angeordnet. Das Hauptgetriebe und/oder das Verteilergetriebe sind insbesondere zwischen der Wankstabilisatoreinrichtung und der Hinterachseinheit angeordnet.

Unter dem Begriff Schubrohrrahmen bzw. Schubrohr werden erfindungsgemäß auch Konstruktion verstanden, welche mit anderen geeigneten Bauteilen als mit Rohren aufgebaut sind. Bevorzugt umfasst der Schubrohrrahmen Rohre bzw. rohrartige Bauteile.

Der Schubrohrrahmen ist insbesondere rahmenartig und beispielsweise trapezförmig oder dergleichen ausgebildet. Der Schubrohrrahmen ist insbesondere als eine Deichsel ausgebildet oder teil einer solchen. Der Schubrohrrahmen umfasst insbesondere wenigstens eine zwischen den Rädern einer Starrachseinheit verlaufende Querachse und insbesondere wenigstens zwei mit der Querachse verbundene und sich vorzugsweise längs zum Fahrgestell in Richtung einer Fahrzeugmitte erstreckende Schubrohre. Die Querachse ist insbesondere eine De-Dion-Achse oder Teil einer solchen. Die Schubrohre sind insbesondere über wenigstens ein Querrohr miteinander verbunden. Vorzugsweise verlaufen die Schubrohre eines Schubrohrrahmens seitlich, beispielsweise rechts und links, neben der Brennkraftmaschine und/oder der elektrischen Maschine und/oder dem Hauptgetriebe und/oder dem Verteilergetriebe.

Die wenigstens zwei Starrachseinheiten umfassen insbesondere wenigstens eine erste Achseinheit, welche vorzugsweise als Vorderachseinheit ausgebildet ist. Die wenigstens zwei Starrachseinheiten umfassen insbesondere wenigstens eine zweite Achseinheit, welche vorzugsweise als Hinterachseinheit ausgebildet ist.

Die Starrachseinheit umfasst insbesondere wenigstens zwei Halbwellen bzw. Gelenkwellen zur Drehmomentübertragung von dem Ausgleichsgetriebe zu den Rädern bzw. zu einem Radvorgelege. Vorzugsweise verläuft die Halbwelle zwischen dem Schubrohrrahmen und einem Längsträger des Fahrgestells. Die Halbwelle verläuft insbesondere oberhalb des Schubrohrrahmens. Die Halbwelle verläuft insbesondere unterhalb des Längsträgers.

Im Rahmen der vorliegenden Erfindung wird unter dem Begriff Antreiben insbesondere eine Drehmomentübertragung verstanden. Bei der von der Brennkraftmaschine antreibbaren elektrischen Maschine erfolgt insbesondere eine Drehmomentübertragung von der Brennkraftmaschine auf die elektrische Maschine.

Die Wankstabilisatoreinrichtung dient insbesondere zur Minderung bzw. Verhinderung von Wankbewegungen im Fahrbetrieb und insbesondere bei Kurvenfahrt und/oder beim Überfahren von Hindernissen und zum Beispiel Bodenunebenheiten. Dabei wird unter einer Wankbewegung, welche auch als Wanken bzw. Rollen des Fahrzeugs bezeichnet werden kann, im Wesentlichen eine Drehbewegung des Fahrzeugs um seine Längsachse verstanden.Die Wankstabilisatoreinrichtung umfasst insbesondere wenigstens einen und vorzugsweise wenigstens zwei schwenkbare Waagbalken. Dabei sind an jedem Waagbalken zwei Schubrohrrahmen befestigt. Die Wankstabilisatoreinrichtung umfasst insbesondere wenigstens ein Waagbalkenlager, in welchem der Waagbalken drehbar bzw. schwenkbar aufgenommen ist. An jedem Längsträger ist vorzugsweise wenigstens ein Waagbalkenlager mit einem Waagbalken angeordnet. Die einzelnen Schubrohrrahmen sind insbesondere über jeweils wenigstens zwei Stabilisatorstreben an die Waagbalken angebunden. Die beiden an der gemeinsamen Wankstabilisatoreinrichtung angebundenen Schubrohrrahmen sind insbesondere um wenigstens eine gemeinsame Drehachse bzw. Schwenkachse bewegbar. Die Drehachse bzw. Schwenkachse des Waagbalkens bzw. des Waagbalkenlagers verläuft insbesondere quer zur Fahrzeuglängsachse bzw. quer zu den Längsträgern des Fahrgestells und insbesondere parallel zu einem Querträger der Wankstabilisatoreinrichtung. Die Wankstabilisatoreinrichtung umfasst insbesondere wenigstens einen Querträger, welcher sich zwischen zwei Längsträgern des Fahrgestells erstreckt. An dem Querträger ist insbesondere wenigstens ein Zentralgelenk und insbesondere Kugelgelenk zur bewegbaren Anbindung der Schubrohrrahmen angeordnet.

Die wenigstens zwei Schubrohrrahmen und insbesondere die Schubrohrrahmen der Vorderachseinheit und der Hinterachseinheit sind insbesondere über jeweils wenigstens ein Zentralgelenk an einer gemeinsamen Aufnahme an dem Fahrgestell angebunden, z. B. an dem Querträger der Wankstabilisatoreinrichtung. Das Zentralgelenk befindet sich insbesondere an dem Querrohr des Schubrohrrahmens.

Im Rahmen der vorliegenden Erfindung wird unter den Positionsangaben vor bzw. hinter der Wankstabilisatoreinrichtung insbesondere eine Position in Bezug auf den Querträger und/oder den Waagbalken und/oder die (gemeinsame) Drehachse bzw. Schwenkachse der Waagbalkenlager verstanden. Die hier vorgestellte Fahrzeugbaugruppe kann vorzugsweise auch bei anderen Arten von Kraftfahrzeugen vorteilhaft eingesetzt werden, sodass im Rahmen der vorliegenden Erfindung die Begriffe Nutzfahrzeug und Kraftfahrzeug insbesondere synonym verwendet werden können. Das Nutzfahrzeug ist beispielsweise ein 4x4 oder ein 6x6. Das Nutzfahrzeug kann auch ein 8x8 oder ein 2x4 sein.

Die Brennkraftmaschine ist insbesondere als ein Verbrennungsmotor und vorzugsweise als ein Dieselmotor oder ein Ottomotor oder ein Vielstoffmotor oder ein Gasmotor ausgebildet.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

### In den Figuren zeigen:

- Figur 1: eine schematische Darstellung einer erfindungsgemäßen Fahrzeugbaugruppe in einer Draufsicht;
- Figur 2: eine schematische Darstellung einer anderen erfindungsgemäßen Fahrzeugbaugruppe in einer Draufsicht;
- Figur 3: eine schematische Darstellung einer weiteren erfindungsgemäßen Fahrzeugbaugruppe in einer Draufsicht;
- Figur 4: eine schematische Darstellung einer weiteren erfindungsgemäßen Fahrzeugbaugruppe in einer Draufsicht;
- Figur 5: eine schematische Darstellung einer weiteren erfindungsgemäßen Fahrzeugbaugruppe in einer Draufsicht; und
- Figur 6: eine schematische Darstellung einer Fahrzeugbaugruppe in einer perspektivischen Ansicht von schräg oben.

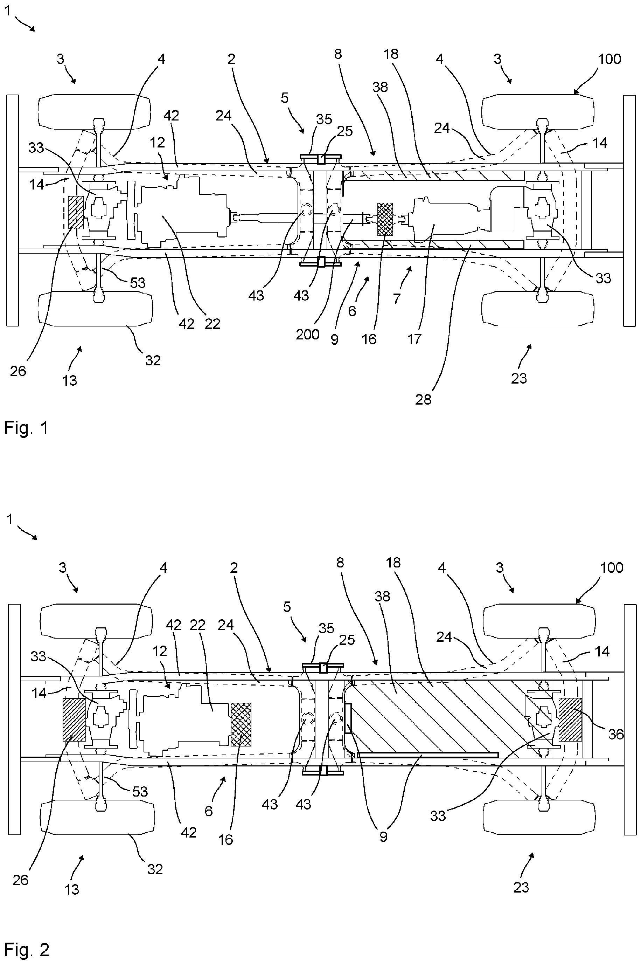

Die Figur 1 zeigt eine erfindungsgemäße Fahrzeugbaugruppe 1 für ein hier nur teilweise dargestelltes geländegängiges und hier beispielhaft als 4x4 ausgebildetes Nutzfahrzeug 100. Die Fahrzeugbaugruppe 1 umfasst ein Fahrgestell 2 und einen Triebstrang 12 mit einer Brennkraftmaschine bzw. Verbrennungsmotor 22 und einer Getriebeeinrichtung 7. Der Triebstrang 12 ist hier mit zwei Starrachseinheiten 3 ausgestattet, umfassend eine erste als Vorderachseinheit 13 ausgebildete Achseinheit und eine als Hinterachseinheit 23 ausgebildete zweiten Achseinheit.

Die Getriebeeinrichtung 7 umfasst hier ein Hauptgetriebe 17, welches über eine Welle 200 mit der Brennkraftmaschine 22 verbunden ist und direkt an einem Ausgleichsgetriebe 33 der Hinterachseinheit 23 gekoppelt. Dadurch ergibt sich eine sogenannte Transaxle-Bauweise. Dabei sind der Motor 22 vorne und das Hauptgetriebe 17 an der angetriebenen Hinterachseinheit 23 angeordnet. Die Welle 200 zwischen der Getriebeeinrichtung 7 und dem Motor 22 ist hier als eine Transaxle-Welle ausgebildet. Die Ausgleichsgetriebe sind hier über Halbwellen 53 an die Räder 32 bzw. deren hier nicht sichtbare Radvorgelege 301 gekoppelt.

Die Starrachseinheiten 3 umfassen hier jeweils einen Schubrohrrahmen 4, welcher eine zwischen den Rädern 32 verlaufende Querachse 14 und zwei mit der Querachse 14 verbundene Schubrohre 24 umfasst. Die Schubrohre 24 eines Schubrohrrahmens 4 erstrecken sich hier längs in Richtung der Fahrzeugmitte und sind dort über ein Querrohr 34 verbunden.

Die Getriebeeinrichtung 7 ist mit ihren drehmomentübertragenden Komponenten außerhalb des Schubrohrrahmens 4 angeordnet. Dabei sind die Ausgleichsgetriebe 33 getrennt von den Querachsen 14 der Schubrohrrahmen 4 an dem Fahrgestell 2 befestigt. Die Starrachseinheiten 3 sind hier somit in der Bauweise einer De-Dion-Achse ausgeführt. Die zum Antrieb vorgesehenen Halbwellen 53 verlaufen ebenfalls außerhalb der Schubrohrrahmen 4.

Das Fahrgestell 2 bzw. Chassis ist hier als Leiterrahmen ausgebildet und umfasst einen rechten und einen linken Längsträger 42. Die Längsträger 42 sind hier an den Enden über entsprechende Querstreben miteinander verbunden. In einem zentralen Bereich sind die Längsträger 42 hier zudem mit einem zu einer Wankstabilisatoreinrichtung 5 gehörenden Querträger 15 verbunden. In der hier gezeigten Ausführung wird der Querträger 15 durch zwei parallele und beabstandete Querträgerelemente bereitgestellt. Der Leiterrahmen kann weitere hier nicht näher beschriebene Querstreben bzw. Versteifungen aufweisen.

Die Schubrohrrahmen 4 sind hier jeweils über ein Zentralgelenk 43 bewegbar an dem Fahrgestell 2 befestigt. Dabei sind die Zentralgelenke 43 an den Querrohren 34 und an dem Querträger 15 angebunden und beispielsweise als Kugelgelenke oder Kugelflächengelenke oder auch als Gummipuffer ausgeführt. Dadurch ist eine besonders große Verschränkung der Achseinheiten 3 bzw. der Räder 32 möglich, sodass auch große Hindernisse gut überfahren werden können.

Um die Fahrstabilität und Geländegängigkeit zu verbessern, ist hier eine Wankstabilisatoreinrichtung 5 vorgesehen. Dadurch wird eine erhebliche Minderung von Wankbewegungen im Fahrbetrieb bzw. beim Überfahren von Hindernissen erreicht. Die Wankstabilisatoreinrichtung 5 umfasst hier zwei gegenüberliegende Waagbalken 35, welche über jeweils ein Waagbalkenlager 25 an einem Längsträger 42 drehbar gelagert sind.

An je einem Waagbalken 35 sind hier die Schubrohrrahmen 4 der Vorderachseinheit 13 und der Hinterachseinheit 23 angebunden.

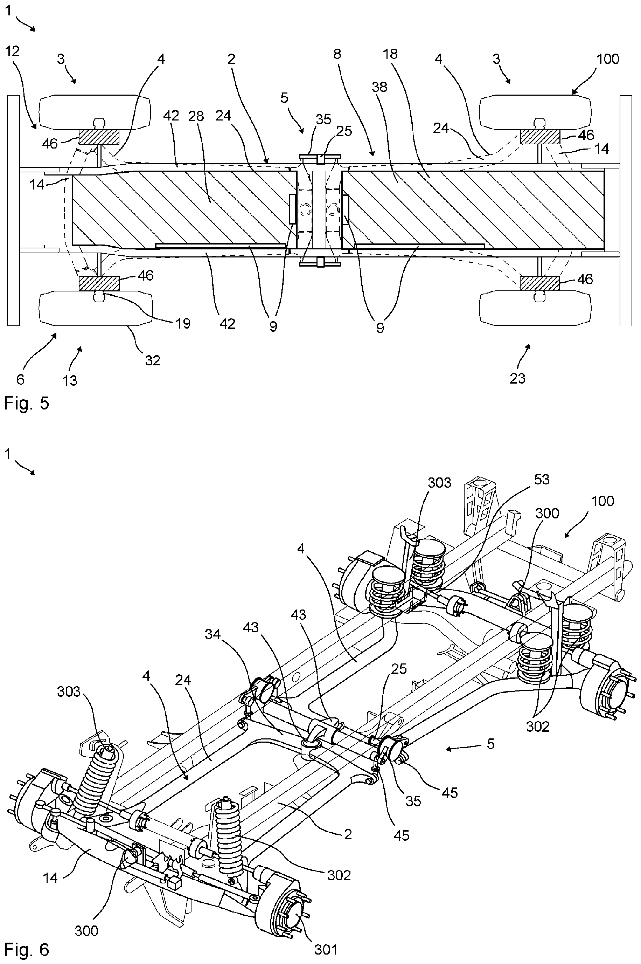

Dazu ist zwischen dem Waagbalken 35 und dem jeweiligen Schubrohrrahmen 4 eine in der Figur 5 besonders gut zu erkennende Wankstabilisatorstrebe 45 angeordnet. Durch diese Anbindung an zwei gemeinsame Waagbalken 35 können die Schubrohrrahmen 4 zueinander in erheblichem Maß verschränkt werden, während ungünstigen Wankbewegungen entgegengewirkt wird.

Um die Fahrzeugbaugruppe 1 besonders flexibel und vielseitig einsetzen zu können, ist der Triebstrang 12 hier mit einer elektrischen Maschineneinrichtung 6 mit einer ersten elektrischen Maschine 16 ausgestattet. So kann beispielsweise ein Hybridantrieb verwirklicht werden oder es werden Nebenaggregate mit elektrischem Strom versorgt. Zudem ist eine als Elektromotor ausgebildete und als Fahrantrieb für die Vorderachseinheit 13 dienende zweite elektrische Maschine 26 vorgesehen.

Die elektrische Maschine 16 dient hier als Generator und wird von der Brennkraftmaschine 22 angetrieben. Dazu ist der Generator 16 hier an die Transaxle-Welle 200 angebunden und zwischen der Brennkraftmaschine 22 und dem Hauptgetriebe 17 angeordnet. Um eine optimale Wirkung der Wankstabilisatoreinrichtung 5 und der Zentralgelenke 43 zu gewährleisten, ist der Generator 16 in betriebsgemäßer Vorwärtsfahrtrichtung hinter der Wankstabilisatoreinrichtung 5 angeordnet.

Der Generator 16 dient zum Aufladen zweier Batterien 18, 28 einer Batterieeinrichtung 8. Die Batterieeinrichtung 8 dient hier zur Energieversorgung der zweiten elektrischen Maschine 26. Dadurch wird hier ein Allradbetrieb ermöglicht, wobei zugleich auf ein Verteilergetriebe und die zugehörige Wellenanordnung verzichtet werden kann.

Zur Befestigung der Batterie 18 an dem Fahrgestell 2 ist eine hier nur schematisch dargestellte Aufnahmeeinrichtung 9 vorgesehen. Beispielsweise erstreckt sich die Aufnahmeeinrichtung 9 entlang beider Längsträger 42 und nimmt jeweils eine Batterie 18, 28 an einem Längsträger 42 auf. Dadurch kann die Batterie so an dem Fahrgestell befestigt werden, dass die besonderen Fahreigenschaften optimal unterstützt oder sogar weiter verbessert werden.

Die zweite elektrische Maschine 26 ist hier oberhalb der Querachse 14 und in Vorwärtsfahrtrichtung vor dem Ausgleichsgetriebe 33 angeordnet. Der Fahrantrieb 26 kann bedarfsweise zugeschaltet werden. Es kann vorgesehen sein, dass der Generator 16 sowohl von der Brennkraftmaschine 22 als auch im Schubbetrieb angetrieben wird, um die Batterieeinrichtung 8 aufzuladen. Die Batterieeinrichtung 8 kann eine hier nicht näher dargestellte Leistungselektronik 38 und/oder andere Steuer- und Kontrolleinrichtungen umfassen.

Die Figur 2 zeigt die Fahrzeugbaugruppe 1 mit einem seriellen Hybridantrieb. Dazu werden die beiden Starrachseinheiten 3 hier nur durch einen elektrischen Fahrantrieb angetrieben. An der Vorderachseinheit 13 sind hier eine als Elektromotor bzw. Fahrmotor ausgebildete zweite elektrische Maschine 26 und an der Hinterachseinheit 23 eine ebenfalls als Elektromotor bzw. Fahrmotor ausgebildete dritte elektrische Maschine 36 vorgesehen.

Die Fahrmotoren 26, 36 sind hier an jeweils ein Ausgleichsgetriebe 33 angekoppelt und sind oberhalb der jeweiligen Querachse 14 angeordnet. Die erste elektrische Maschine 16 ist als Generator ausgebildet und wird von der Brennkraftmaschine 22 angetrieben. Der Generator 16 dient zum Aufladen der Batterieeinrichtung 8.

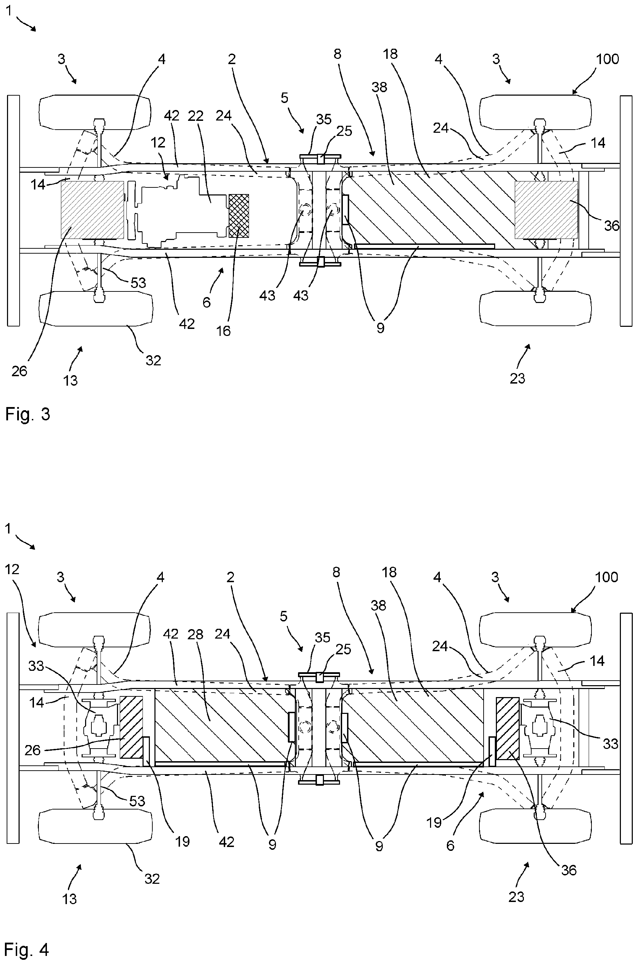

In einer ebenfalls bevorzugten Ausgestaltung können anstelle der achsweisen Fahrmotoren 26, 36 auch die einzelnen angetriebenen Räder 32 mit jeweils einem eigenen Fahrmotor 46 ausgestattet sein. Solche Fahrmotoren 46 sind beispielsweise mit Bezug zu der Figur 4 beschrieben.

In der hier gezeigten Ausgestaltung ist die Batterieeinrichtung 8 nur mit einer einzelnen Batterie 18 ausgestattet. Es können aber auch zwei oder mehr Batterien 18 vorgesehen sein, beispielsweise wie mit Bezug zu den Figuren 3 bzw. 4 beschrieben. Die Batterie 18 ist hier hinter der Wankstabilisatoreinrichtung 5 und zwischen den Längsträgern 42 angeordnet. Zur Befestigung der Batterie 18 an dem Fahrgestell 2 ist eine hier nur schematisch dargestellte Aufnahmeeinrichtung 9 vorgesehen. Beispielsweise erstreckt sich die Aufnahmeeinrichtung 9 entlang eines Längsträgers 42 oder beider Längsträger 42 und/oder entlang des Querträgers 15.

Um eine besonders flexible Verwendung der Fahrzeugbaugruppe 1 zu ermöglichen, bietet die Aufnahmeeinrichtung 9 hier die Möglichkeit, entweder die Batterie 18 oder das Hauptgetriebe 17 sowie ein nicht gezeigtes Verteilergetriebe am Fahrgestell 2 zu befestigen. Das bietet eine besonders zügige und modulare Umrüstung von einem konventionellen zu einem Hybridantrieb oder umgekehrt.

Die Aufnahmeeinrichtung 9 kann auch zur Befestigung der beiden Batterien 18, 28 der mit Bezug zur Figur 1 beschriebenen Fahrzeugbaugruppe 1 vorgesehen sein. Dann dient die Aufnahmeeinrichtung 9 dazu, die eine Batterie 18 an dem rechten Längsträger 42 und die andere Batterie 28 an dem linken Längsträger 42 zu befestigen. In dieser Ausgestaltung kann das Hauptgetriebe 17 im Triebstrang 12 verbleiben und erstrecken sich zwischen den beiden Batterien 18, 28. Das bietet eine besonders zügige und modulare Umrüstung von einem konventionellen zu einem teilelektrischen Antrieb oder umgekehrt.

Die Figur 3 zeigt eine Ausgestaltung der mit Bezug zu der Figur 2 beschriebenen Fahrzeugbaugruppe 1, bei welcher die Fahrmotoren 26, 36 die Ausgleichsgetriebe 33 der jeweiligen Achseinheit 13, 23 ersetzen bzw. bereitstellen. Das hat den Vorteil, dass an den Achseinheiten 13, 23 auf mechanische Ausgleichsgetriebe 33 verzichtet werden kann, sodass Gewicht eingespart und Bauraum gewonnen wird. Vom jeweiligen Fahrmotor 26, 26 aus erfolgt dann insbesondere eine mechanische Momentübertragung zu den Rädern 32 bzw. Radvorgelegen 201 der entsprechenden Achseinheit 13, 23. Eine solche Ausgestaltung der Fahrmotoren 26, 26 kann auch bei der mit Bezug zu der Figur 4 beschriebenen Fahrzeugbaugruppe 1 vorteilhaft eingesetzt werden.

In der Figur 4 ist die Fahrzeugbaugruppe 1 mit einem vollelektrisch angetriebenen Triebsstrang 12 gezeigt. Die in Vorwärtsfahrtrichtung vor der Wankstabilisatoreinrichtung 5 angeordnete Aufnahmeeinrichtung 9 bietet hier die Möglichkeit, entweder die Brennkraftmaschine 22 oder eine zweite Batterie 28 der Batterieeinheit 8 am Fahrgestell 2 zu befestigen. Für den vollelektrischen Antrieb wurde daher die Brennkraftmaschine 22 gegen die zweite Batterie 28 getauscht. Dadurch kann die Laufzeit bzw. Reichweite des elektrischen Antriebs erheblich verbessert werden. Zudem wurde, wie zuvor in der Figur 2 beschrieben, auch hinter der Wankstabilisatoreinrichtung 5 eine Batterie 18 mit der Aufnahmeeinrichtung 9 am Fahrgestell 2 befestigt. Dabei wurde diese Batterie 18 hier im Tausch gegen das Hauptgetriebe 17 eingesetzt.

Die hier vorgestellte Fahrzeugbaugruppe 1 ist zudem mit einer Halteeinrichtung 19 ausgestattet, welche einen modularen und zügigen Austausch der Komponenten des konventionellen Antriebs bzw. des Hybridantriebs gegen die Komponenten des vollelektrischen Antriebs erlaubt. Hier wurde an der Vorderachseinheit 13 die Brennkraftmaschine 22 aus der Halteeinrichtung 19 entfernt. Anschließend wurde die zweite elektrische Maschine 26 bzw. der Fahrmotor für die Vorderachseinheit 13 an der Halteeinrichtung 19 eingesetzt.

Für die Hinterachseinheit 23 ist hier eine entsprechende Halteeinrichtung 19 vorgesehen, welche das Hauptgetriebe 17 und ein Verteilergetriebe 27 oder wahlweise die hier gezeigte dritte elektrische Maschine 36 aufnehmen kann. So erlaubt die Halteeinrichtung 19 einen modularen Ausbau von Brennkraftmaschine 22 und Hauptgetriebe 17 bzw. Verteilergetriebe im Tausch gegen die Fahrmotoren 26, 36.

Die Figur 5 zeigt eine Fahrzeugbaugruppe 1 mit einer anderen vollelektrischen Ausführung des Triebstrangs 12. Dabei kommt hier eine vierte elektrische Maschine 46 zum Einsatz, welche als Fahrmotor und im speziellen als Radmotor bzw. Nabenmotor ausgebildet ist. Dabei ist jedes angetriebene Rad 32 hier mit einem eigenen Fahrmotor 46 ausgestattet. Dabei kann eine Befestigung der Fahrmotoren 46 über jeweils eine Halteeinrichtung 19 erfolgen. Beispielsweise lässt die Halteeinrichtung 19 entweder die Befestigung eines Fahrmotors 46 oder eines Radvorgeleges 301 bzw. einer Halbwelle 53 oder auch eines Ausgleichsgetriebes 33 zu.

Durch die Ausstattung mit den Radmotoren 46 kann hier auf die achsweisen Ausgleichsgetriebe 33 und auch auf alle weiteren Komponenten der Getriebeeinrichtung 7 verzichtet werden. Der gewonnene Bauraum wird hier durch erheblich vergrößerte Batterien 18, 28 vorteilhaft ausgenutzt. Dabei sind die Batterien 18, 28 über jeweilige Aufnahmeeinrichtungen 9 am Fahrgestell 2 befestigt.

Weitere Ausführungen der Fahrzeugbaugruppe 1 sind in der Figur 6 näher dargestellt. Dort ist die Ausgestaltung der Schubrohrrahmen 4 und deren Anbindung an das Fahrgestell 2 mittels der Wankstabilisatoreinrichtung 5 und der Zentralgelenke 43 besonders gut zu erkennen. In der dort gezeigten Ausführung sind die Starrachseinheiten 3 zudem mit jeweils einem Wattgestänge 300 ausgestattet. Es können auch andere geeignete Arten von Stabilisatoren vorgesehen sein. Zudem ist die dort gezeigte Vorderachseinheit 13 mit zu einem Federbein zusammengesetzten Federn 302 und Dämpfern 303 ausgestattet. Die Hinterachseinheit 23 ist mit vier Federn 302 und zwei Dämpfern 303 ausgestattet. Von der Getriebeeinrichtung 7 sind in der Figur 6 nur die Halbwellen 53 und die Radvorgelege 301 gezeigt.

**Bezugszeichenliste:**

| | | | |
|---|---|---|---|
| 1 | Fahrzeugbaugruppe | 46 | Maschine |
| 2 | Fahrgestell | 53 | Halbwelle |
| 3 | Starrachseinheit | 100 | Nutzfahrzeug |
| 4 | Schubrohrrahmen | 200 | Welle |
| 5 | Wankstabilisatoreinrichtung | 300 | Wattgestänge |
| | | 301 | Radvorgelege |
| 6 | Maschineneinrichtung | 302 | Feder |
| 7 | Getriebeeinrichtung | 303 | Dämpfer |
| 8 | Batterieeinrichtung | | |
| 9 | Aufnahmeeinrichtung | | |
| 12 | Triebstrang | | |
| 13 | Achseinheit, Vorderachseinheit | | |
| 14 | Querachse | | |
| 15 | Querträger | | |
| 16 | Maschine | | |
| 17 | Hauptgetriebe | | |
| 18 | Batterie | | |
| 19 | Halteeinrichtung | | |
| 22 | Brennkraftmaschine | | |
| 23 | Achseinheit, Hinterachseinheit | | |
| 24 | Schubrohr | | |
| 25 | Waagbalkenlager | | |
| 26 | Maschine | | |
| 28 | Batterie | | |
| 32 | Rad | | |
| 33 | Ausgleichsgetriebe | | |
| 34 | Querrohr | | |
| 35 | Waagbalken | | |
| 36 | Maschine | | |
| 38 | Leistungselektronik | | |
| 42 | Längsträger | | |
| 43 | Zentralgelenk | | |
| 45 | Wankstabilisatorstrebe | | |

## Patentansprüche

1. Fahrzeugbaugruppe (1) für ein insbesondere geländegängiges Nutzfahrzeug (100), umfassend wenigstens ein Fahrgestell (2) und wenigstens einen an dem Fahrgestell (2) aufnehmbaren Triebstrang (12), wobei der Triebstrang (12) wenigstens zwei Starrachseinheiten (3) mit jeweils wenigstens einem Schubrohrrahmen (4) umfasst, wobei die Schubrohrrahmen (4) der wenigstens zwei Starrachseinheiten (3) mittels wenigstens einer am Fahrgestell (2) befestigten Wankstabilisatoreinrichtung (5) gelenkartig miteinander verbunden sind,
**gekennzeichnet**
**durch** wenigstens eine Aufnahmeeinrichtung (9), welche dazu geeignet und ausgebildet ist, wenigstens eine Batterie (18) wenigstens einer Batterieeinrichtung (8) zur Energieversorgung wenigstens einer wenigstens einen elektrischen Fahrantrieb bereitstellenden elektrischen Maschineneinrichtung (6) in Vorwärtsfahrtrichtung vor und/oder hinter der Wankstabilisatoreinrichtung (5) und wenigstens teilweise oberhalb der Schubrohrrahmen (4) an das Fahrgestell (2) anzubinden.

2. Fahrzeugbaugruppe (1) nach dem vorhergehenden Anspruch, wobei die wenigstens eine Batterie (18) zwischen zwei Längsträgern (42) des Fahrgestells (2) aufnehmbar ist.

3. Fahrzeugbaugruppe (1) nach einem der vorhergehenden Ansprüche, wobei die Aufnahmeeinrichtung (9) dazu geeignet und ausgebildet ist, die wenigstens eine Batterie (18) an einem Querträger (15) der Wankstabilisatoreinrichtung (5) anzubinden, welcher sich zwischen zwei Längsträgern (42) des Fahrgestells (2) erstreckt.

4. Fahrzeugbaugruppe (1) nach einem der vorhergehenden Ansprüche, wobei die Aufnahmeeinrichtung (9) dazu geeignet und ausgebildet ist, wenigstens eine Leistungselektronik (38) und/oder wenigstens eine Steuereinrichtung für die Batterieeinrichtung (8) aufzunehmen.

5. Fahrzeugbaugruppe (1) nach einem der vorhergehenden Ansprüche, wobei die elektrische Maschineneinrichtung (6) wenigstens eine einen Fahrmotor bereitstellende elektrische Maschine (26, 36, 46) umfasst und wobei die elektrische Maschine (26, 36, 46) wenigstens einen Teil des für eine Fahrzeugfortbewegung vorgesehenen Drehmoments bereitstellt.

6. Fahrzeugbaugruppe (1) nach Anspruch 5 wobei für jede antreibbare Starrachseinheit (3) wenigstens eine elektrische Maschine (26, 36, 46) vorgesehen ist und wobei die elektrische Maschine (26, 36, 46) an einem Ausgleichsgetriebe (33) angebunden ist.

7. Fahrzeugbaugruppe (1) nach einem der Ansprüche 5 oder 6, wobei für jedes antreibbare Rad (32) des Triebstrangs (12) wenigstens eine elektrische Maschine (46) vorgesehen ist und wobei die elektrische Maschine (46) drehmomentübertragend an ein Rad (32) angebunden ist.

8. Fahrzeugbaugruppe (1) nach einem der Ansprüche 5, 6 oder 7, wobei die elektrische Maschine (26, 36, 46) und/oder ein Ausgleichsgetriebe (33) außerhalb des Schubrohrrahmens (4) angeordnet ist.

9. Fahrzeugbaugruppe (1) nach einem der vorhergehenden Ansprüche, wobei die elektrische Maschineneinrichtung (6) wenigstens eine einen Generator bereitstellende elektrische Maschine (16) umfasst und wobei die elektrische Maschine (16) dazu geeignet und ausgebildet ist, von wenigstens einer Brennkraftmaschine (22) angetrieben zu werden und die Batterieeinrichtung (18) aufzuladen.

10. Fahrzeugbaugruppe (1) nach Anspruch 9, wobei die elektrische Maschine (16) in Vorwärtsfahrtrichtung vor oder hinter der Wankstabilisatoreinrichtung (5) an das Fahrgestell (2) angebunden ist.

11. Fahrzeugbaugruppe (1) nach einem der vorhergehenden Ansprüche, wobei die Batterieeinrichtung (8) wenigstens zwei Batterien (18, 28) umfasst und wobei die Aufnahmeeinrichtung (9) dazu geeignet und ausgebildet ist, wenigstens eine Batterie (18) in Vorwärtsfahrtrichtung vor der Wankstabilisatoreinrichtung (5) und wenigstens eine Batterie (28) in Vorwärtsfahrtrichtung hinter der Wankstabilisatoreinrichtung (5) an das Fahrgestell (2) anzubinden.

12. Fahrzeugbaugruppe (1) nach einem der vorhergehenden Ansprüche, wobei die Batterieeinrichtung (8) wenigstens zwei Batterien (18, 28) umfasst und wobei die Aufnahmeeinrichtung (9) dazu geeignet und ausgebildet ist, wenigstens eine Batterie (18) an einem rechten Längsträger (42) des Fahrgestells (2) und wenigstens eine Batterie (28) an einem linken Längsträger (42) des Fahrgestells (2) zu befestigen.

13. Fahrzeugbaugruppe (1) nach einem der vorhergehenden Ansprüche, wobei die Aufnahmeeinrichtung (9) dazu geeignet und ausgebildet ist, wahlweise die wenigstens eine Batterie (18, 28) oder wenigstens eine Brennkraftmaschine (22) und/oder wenigstens eine drehmomentübertragend mit einer Brennkraftmaschine (22) gekoppelte Getriebeeinrichtung (7) an das Fahrgestell (2) anzubinden.

14. Fahrzeugbaugruppe (1) nach Anspruch 1, wobei der Schubrohrrahmen (4) wenigstens eine zwischen den Rädern (32) verlaufende Querachse (14) umfasst und umfassend wenigstens eine elektrische Maschineneinrichtung (6) mit wenigstens einer als Fahrmotor dienenden elektrischen Maschine (26, 36, 46), wobei die elektrische Maschine (26, 36, 46) außerhalb und vorzugsweise oberhalb der Querachse (14) angeordnet ist.

15. Fahrzeugbaugruppe (1) nach einem der vorhergehenden Ansprüche, umfassend wenigstens eine Halteeinrichtung (19), welche dazu geeignet und ausgebildet ist, wahlweise die wenigstens eine elektrische Maschine (26, 36, 46) oder wenigstens teilweise eine drehmomentübertragend mit einer Brennkraftmaschine (22) gekoppelte Getriebeeinrichtung (7) an den Schubrohrrahmen (4) und/oder an das Fahrgestell (2) anzubinden.

## Claims

1. Vehicle subassembly (1) in particular for an off-road utility vehicle (100), comprising at least one chassis (2) and at least one drive train (12) that can be accommodated on the chassis (2), the drive train (12) comprising at least two fixed axle units (3) having at least one torque tube frame (4) each, wherein the torque tube frames (4) of the at least two fixed axle units (3) are articulated to one another by means of at least one antiroll bar device (5) attached to the chassis (2), **characterized by** at least one takeup device (9), which is suitable and configured to link to the chassis (2) at least one battery (18) of at least one battery device (8) to supply power to at least one electric machine device (6) providing at least one electric carriage drive, in the forward traveling direction in front of and/or behind the antiroll bar device (5) and at least partially above the torque tube frames (4).

2. The vehicle subassembly (1) according to the preceding claim, wherein the at least one battery (18) can be accommodated between two longitudinal beams (42) of the chassis (2).

3. The vehicle subassembly (1) according to any of the preceding claims, wherein the takeup device (9) is suitable and configured to link the at least one battery (18) to a traverse (15) of the antiroll bar device (5), which extends between two longitudinal beams (42) of the chassis (2).

4. The vehicle subassembly (1) according to any of the preceding claims, wherein the takeup device (9) is suitable and configured to accommodate at least one power electronics (38) and/or at least one control device for the battery device (8).

5. The vehicle subassembly (1) according to any of the preceding claims, wherein the electric machine device (6) comprises at least one electric machine (26, 36, 46) providing a drive motor, and wherein the electric machine (26, 36, 46) provides at least part of the rotational force provided for vehicle movement.

6. The vehicle subassembly (1) according to claim 5, wherein at least one electric machine (26, 36, 46) is provided for each driven fixed axle unit (3), and wherein the electric machine (26, 36, 46) is linked to a differential gear (33).

7. The vehicle subassembly (1) according to any of the claims 5 or 6, wherein at least one electric machine (46) is provided for each driven wheel (32) of the drive train (12), and wherein the electric machine (46) is linked to a wheel (32) for torque transmission.

8. The vehicle subassembly (1) according to any of the claims 5, 6, or 7, wherein the electric machine (26, 36, 46) and/or a differential gear (33) is disposed external of the torque tube frame (4).

9. The vehicle subassembly (1) according to any of the preceding claims, wherein the electric machine device (6) comprises at least one electric machine (16) providing a generator, and wherein the electric machine (16) is suitable and configured to be driven by at least one internal combustion engine (22) and to charge the battery device (18).

10. The vehicle subassembly (1) according to claim 9, wherein the electric machine (16) is linked to the chassis (2) in front of or behind the antiroll bar device (5), in the forward traveling direction.

11. The vehicle subassembly (1) according to any of the preceding claims, wherein the battery device (8) comprises at least two batteries (18, 28), and wherein the takeup device (9) is suitable and configured to link to the chassis (2) at least one battery (18) in front of the antiroll bar device (5) in the forward traveling direction, and at least one battery (28) behind the antiroll bar device (5), in the forward traveling direction.

12. The vehicle subassembly (1) according to any of the preceding claims, wherein the battery device (8) comprises at least two batteries (18, 28), and wherein the takeup device (9) is suitable and configured to attach at least one battery (18) to a longitudinal beam (42) on the right of the chassis (2) and at least one battery (28) to a longitudinal beam (42) on the left of the chassis (2).

13. The vehicle subassembly (1) according to any of the preceding claims, wherein the takeup device (9) is suitable and configured to optionally link to the chassis (2) the at least one battery (18, 28) or at least one internal combustion engine (22) and/or at least one gear transmission (7) coupled with an internal combustion engine (22) for torque transmission.

14. The vehicle subassembly (1) according to claim 1, wherein the torque tube frame (4) comprises at least one transverse axle (14) extending between the wheels (32), and comprising at least one electric machine device (6) with at least one electric machine (26, 36, 46) serving as a drive motor, wherein the electric machine (26, 36, 46) is disposed external of, and preferably above, the transverse axle (14).

15. The vehicle subassembly (1) according to any of the preceding claims, comprising at least one retaining device (19), which is suitable and configured to optionally link to the torque tube frame (4) and/or to the chassis (2), the at least one electric machine (26, 36, 46) or at least partially, a gear transmission (7) coupled with an internal combustion engine (22) for torque transmission.

## Revendications

1. Module de véhicule (1) pour un véhicule utilitaire (100) notamment tout terrain, comprenant au moins un châssis (2) et au moins un groupe motopropulseur (12) qui peut être monté sur ledit châssis (2), ledit groupe motopropulseur (12) comprenant au moins deux unités d'essieu rigide (3) dotées chacune d'au moins un cadre tubulaire de poussée (4), lesdits cadres tubulaires de poussée (4) desdites au moins deux unités d'essieu rigide (3) étant reliés entr'eux de manière articulée au moyen d'au moins un dispositif stabilisateur antiroulis (5) fixé au châssis (2),
**caractérisé**
**par** au moins un dispositif de montage (9) susceptible de et conçu pour attacher au châssis (2),dans le sens de marche avant, avant et/ou derrière le dispositif stabilisateur antiroulis (5) et au moins partiellement au-dessus du cadre tubulaire de poussée (4), au moins une batterie (18) d'au moins un dispositif de batterie (8) destiné à alimenter en énergie au moins un dispositif mécanique électrique (6) fournissant au moins un entraînement de traction électrique.

2. Module de véhicule (1) selon la revendication précédente, ladite au moins une batterie (18) pouvant être montée entre deux longerons (42) du châssis (2).

3. Module de véhicule (1) selon l'une quelconque des revendications précédentes, le dispositif de montage (9) étant susceptible de et conçu pour attacher ladite au moins une batterie (18) à une traverse (15) du dispositif stabilisateur antiroulis (5), laquelle traverse s'étend entre deux longerons (42) du châssis (2).

4. Module de véhicule (1) selon l'une quelconque des revendications précédentes, le dispositif de montage (9) étant susceptible de et conçu pour recevoir au moins un système électronique de puissance (38) et/ou au moins un dispositif de commande pour le dispositif de batterie (8).

5. Module de véhicule (1) selon l'une quelconque des revendications précédentes, le dispositif mécanique électrique (6) comprenant au moins une machine (26, 36, 46) fournissant un moteur de traction, et ladite machine électrique (26, 36, 46) fournissant au moins une partie du couple de rotation prévu pour un déplacement du véhicule.

6. Module de véhicule (1) selon la revendication 5, au moins une machine électrique (26, 36, 46) étant prévue pour chaque unité d'essieu rigide (3) entraînable, et ladite machine électrique (26, 36, 46) étant attachée à un couple réducteur (33) .

7. Module de véhicule (1) selon l'une quelconque des revendications 5 ou 6, au moins une machine électrique (46) étant prévue pour chaque roue entraînable (32) du groupe motopropulseur (12), et ladite machine électrique (46) étant rattachée à une roue (32) par transmission de couple.

8. Module de véhicule (1) selon l'une quelconque des revendications 5, 6 ou 7, la machine électrique (26, 36, 46) et/ou un couple réducteur (33) étant agencés en dehors du cadre tubulaire de poussée (4).

9. Module de véhicule (1) selon l'une quelconque des revendications précédentes, le dispositif mécanique électrique (6) comprenant au moins une machine électrique (16) fournissant un générateur, et ladite machine électrique (16) étant susceptible de et conçue pour être' entraînée par au moins un moteur à combustion interne (22) et pour recharger le dispositif de batterie (18).

10. Module de véhicule (1) selon la revendication 9, la machine électrique (16) étant, dans le sens de marche avant, attachée au châssis (2) avant ou derrière le dispositif stabilisateur antiroulis (5)

11. Module de véhicule (1) selon l'une quelconque des revendications précédentes, le dispositif de batterie (8) comprenant au moins deux batteries (18, 28) et le dispositif de montage (9) étant susceptible de et conçu pour attacher au châssis (2) au moins une batterie (18), dans le sens de marche avant, avant le dispositif stabilisateur antiroulis (5) et au moins une batterie (28), dans le sens de marche avant, derrière le dispositif stabilisateur antiroulis (5).

12. Module de véhicule (1) selon l'une quelconque des revendications précédentes, le dispositif de batterie (8) comprenant au moins deux batteries (18, 28) et le dispositif de montage (9) étant susceptible de et conçu pour fixer au moins une batterie (18) à un longeron droit (42) du châssis (2) et au moins une batterie (28) à une traverse gauche (42) du châssis (2).

13. Module de véhicule (1) selon l'une quelconque des revendications précédentes, le dispositif de montage (9) étant susceptible de et conçu pour attacher au châssis (2) au choix ladite au moins une batterie (18, 28) ou au moins un moteur à combustion interne (22) et/ou au moins un dispositif de transmission (7) couplé, par transmission de couple, à un moteur à combustion interne (22).

14. Module de véhicule (1) selon la revendication 1, le cadre tubulaire de poussée (4) comprenant au moins un essieu transversal (14) passant entre les roues (32) et comprenant au moins un dispositif mécanique électrique (6) doté d'au moins une machine électrique (26, 36, 46) servant de moteur de traction, ladite machine électrique (26, 36, 46) étant agencée en dehors et de préférence au-dessus de l'essieu transversal (14).

15. Module de véhicule (1) selon l'une quelconque des revendications précédentes, comprenant au moins un dispositif de maintien (19) susceptible de et conçu pour attacher au cadre tubulaire de poussée (4) et/ou au châssis (2) au choix ladite au moins une machine électrique (26, 36, 46) ou au moins partiellement un dispositif de transmission (7) couplé, par transmission de couple, à un moteur à combustion interne (22).
